# EUROPÄISCHE PATENTANMELDUNG

(11) **EP 1 152 313 A2**
(43) Veröffentlichungstag der Anmeldung: **07.11.2001**
(21) Anmeldenummer: 01108443.1
(22) Anmeldetag: 04.04.2001
(51) Int. Cl.: G05D 1/02

(54) **Flugsteuereinheit für ein Gleitschirm-System**

(30) Priorität: 25.04.2000 DE 10020179
(71) Anmelder: EADS Deutschland GmbH, 81663 München (DE)
(72) Erfinder: Schwärzler, Hans-Jürgen, 82024 Taufkirchen (DE)

(57) **Zusammenfassung**

Die Erfindung betrifft ein Einsatzsystem mit einer Steuereinheit für ein Gleitschirm-System für den bemannten Gleitschirm-Flug und einer Missionsplanungs-Station (10), wobei die Missionsplanungs-Station ein dreidimensionales Flugprogramm auf der Basis von Geländedaten, Eigenschaften des Gleitschirm-Systems und atmosphärischen Bedingungen ermittelt und an die Steuereinheit (1) übermittelt, wobei der Steuereinheit (1) eine Navigations-Einrichtung (3) zur Bestimmung der momentanen Ist-Position sowie eine Anzeige (8) umfaßt, die auf der Basis der Ist-Position und des Flugprogramms momentane Steuerbefehle zur Anzeige bringt sowie die Steuereinheit (1) und die Missionsplanungsstation (10).

## Beschreibung

Die Erfindung betrifft eine Steuereinheit für ein Gleitschirm-System für den bemannten Gleitschirm-Flug sowie eine zugehörige Missionsplanungsstation.

Bei heutigen militärischen Einsätzen besteht das Erfordernis, dass Gleitschirm-Springer zuverlässig einen vorbestimmten Zielpunkt anfliegen und erreichen können. Aus dem Stand der Technik ist eine Navigationshilfe für Gleitschirm-Springer bekannt, die auf der Basis eines vorgegebenen Absetzpunktes aus einem Flugzeug sowie eines vorgegebenen Landepunktes einen geradlinigen oder aus geradlinigen Abschnitten zusammengesetzter Flugpfad anzeigt. Der Gleitschirm-Springer führt ein Anzeigegerät mit einem Computer mit sich, in den sowohl topographische Daten sowie der geradlinige Flugpfad vor dem Einsatz eingelesen werden können. Der Computer bringt diese Daten beispielsweise in Form eines Geländes und einem darin eingezeichneten geradlinigen Flugpfad zur Anzeige. Zusätzlich führt der Pilot eine GPS-Navigationsanlage mit sich, die die momentane Ist-Position des Gleitschirms bestimmt. Diese momentane Ist-Position wird ebenfalls von dem Computer verarbeitet und in der zweidimensionalen Geländeanzeige zur Darstellung gebracht wird. Durch Anzeige des geradlinigen Soll-Flugpfads und Soll-Landepunkt sowie seiner momentanen Ist-Position steuert der Gleitschirm-Springer den Gleitschirm.

Ein Nachteil des Standes der Technik ist, dass der Springer den Soll-Landepunkt unter Umständen nicht erreichen kann, wenn dieser ungünstig zum Absetzpunkt gelegen ist oder unvorhergesehene Störgrößen auftreten.

Es ist daher die Aufgabe der Erfindung, eine Steuereinheit für ein Gleitschirm-System für Gleitschirm-Springer bereitzustellen, das gerätetechnisch für Gleitschirm-Einsätze geeignet ist und den Gleitschirm-Springer möglichst zuverlässig zu einem Soll-Landepunkt führt.

Diese Aufgabe wird mit den Merkmalen des Anspruchs 1 gelöst. Weitere Ausführungsformen sind in den Unteransprüchen angegeben.

Im folgenden wird die Erfindung anhand der beiliegenden Figuren beschrieben, die zeigen:
- Fig. 1: eine funktionale Darstellung einer ersten Ausführungsform der Erfindung,
- Fig. 2: eine funktionale Darstellung einer zweiten Ausführungsform der Erfindung.

Erfindungsgemäß führt der Gleitschirm-Springer eine Steuereinheit 1 mit sich, die eine Navigations-Einrichtung 3, ein Flugführungs-System 4 mit einer Flugprogramm-Einrichtung 5 und einem Rechner 7 und eine Anzeige 8 umfaßt. Diese Einrichtungen 3, 4, 5, 7, 8 können auf verschiedene Weise nach dem Stand der Technik gerätetechnisch inte-griert sein. Dabei stehen die Einrichtungen 3, 4, 5, 7, 8 gegenseitig im Datenaustausch, wobei insbesondere die Navigations-Einrichtung 3 über eine Leitung 9a mit dem Rechner 7, die Flugprogramm-Einrichtung 5 über eine Leitung 9b mit dem Rechner 7 und der Rechner 7 über eine Leitung 9c mit der Anzeige 8 in Verbindung steht.

Der Ausrüstung 1 ist eine Missionsplanungsstation 10 zugeordnet, die eine Bodenstation oder eine Bordstation des absetzenden Flugzeugs sein kann. Die Missionsplanungsstation 10 umfaßt eine Geländedatenbasis 11 mit dreidimensionalen Gelände- und Kulturdaten und entsprechenden Funktionen und eine dieser zugeordneten Berechnungseinheit 12, mit denen zumindest die Vorgabe eines Landepunkts oder mehrerer möglicher Landepunkte sowie die Errechnung zumindest eines Absetzpunkts des Gleitschirms vom Flugzeug erfolgen kann. In der Berechnungseinheit 12 liegen weiterhin Daten über die atmosphärischen Bedingungen im Luftraum des Einsatzgebietes vor, d.h. insbesondere Daten über das atmosphärische Höhenprofil, also Windrichtungen und Windgeschwindigkeiten je Höhe, die Lufttemperaturen im Luftraum sowie optional ein Modul zur Berechnung und Simulation von Wolkenbildungen oder Vereisungsgefahren. In der Berechnungseinheit 12 liegen weiterhin Parameter des Gleitschirm-Systems vor. Diese umfassen insbesondere kritische Grenzen des Gleitschirms aufgrund seiner aerodynamischen Eigenschaften, z.B. Gleitwinkel, Auftriebsbeiwerte, Drehraten in Abhängigkeit der Verstellung und Last am Schirm. Die Berechnungseinheit 12 ist in der Lage, aufgrund der Parameter des Gleitschirm-Systems in Zusammenhang mit den atmosphärischen Bedingungen eine Reichweite sowie Flugpfade zu ermitteln. Optional umfaßt die Missionsplanungsstation 10 ein Bedrohungsszenario-Mo-dul 13, in dem gegnerische Bedrohungen sowie deren Wertigkeiten für einen geplanten Einsatz abgespeichert sind. Weiterhin kann dort auch eine Analyse-Einheit vorgesehen sein, mit der beispielsweise auf Basis künstlicher Intelligenz die Bedrohungen bzw. bewerteten Bedrohungen im Zusammenspiel mit alternativen Soll-Flugpfaden eine Optimierung dieser Flugpfade erfolgen kann. Weiterhin kann optional in der Missionsplanungsstation ein Erfolgs-/Risiko-analyse-Modul 14 für die Mission vorgesehen sein, das das Risiko bzw. die Erfolgswahrscheinlichkeit ermittelt, wenn ein Gleitschirm-Springer aufgrund eines ermittelten Soll-Flug-pfades den Flug beginnt. Weiterhin kann optional in der Missionsplanungsstation 10 ein Simulations-Modul 15 vorgesehen sein, mit dem die Simulation des ganzen Missionsablaufs nachvollzogen werden kann.

In der Missionsplanungsstation 10 wird entweder ein Landepunkt oder mehrere Landepunkte vorgegeben. Alternativ können auch in der Missionsplanungsstation 10 mehrere Landepunkte mit zugeordneten Erfolgswahrscheinlichkeiten ermittelt werden. Die Missionsplanungsstation 10 ermittelt ferner einen Absetzpunkt oder mehrere altenative Absetzpunkte für bevorzugte Missionen sowie die zugehörigen Absetzhöhen. Weiterhin ermittelt die Bodenstation 10 einen Soll-Flugpfad oder mehrere Soll-Flugpfade. Die Ermittlung dieser Sollvorgaben erfolgt erfindungsgemäß aufgrund dreidimensionaler Geländedaten, den kritischen Grenzen bzw. aerodynamischen Bedingungen des Gleitschirm-Systems sowie den atmosphärischen Bedingungen. Zusätzlich kann in die Berechnung der Sollvorgaben auch Werte des Bedrohungsszenarios einfließen. Da bei der Ermittlung der Sollvorgaben die atmos-phärischen Bedingungen im gesamten Luftraum des Einsatzgebietes sowie dreidimensionale Geländedaten vorliegen, ermittelt die Bodenstation 10 einen dreidimensionalen Soll-Flugpfad.

Von der Missionsplanungsstation 10 aus werden die für die Mission erforderlichen Daten in die Steuereinheit 1 übertragen. Hierfür kann eine Leitung 20 vorgesehen sein, über die vor dem Einsatz die relevanten Daten in die Ausrüstung eingelesen werden. Diese Übertragung der Daten kann auch der Datenträger oder während des Einsatzes per Funk erfolgen. Vorzugsweise werden die Daten in die Flugprogramm-Einrichtung eingelesen, die diese Daten abspeichert und dem Rechner 7 zeitgerecht zuführt. Die Navigations-Einrichtung 3 ermittelt die Ist-Position während des Fluges des Gleitschirm-Systems. Diese Ermittlung der Ist-Position kann auf der Basis einer Satellitennavigations-Einrichtung erfolgen. Auf der Basis der Ist-Position des Gleitschirm-Systems sowie der relevanten Sollvorgaben ermittelt der Rechner 7 Steuervorgaben für den Gleitschirm-Springer. Diese Steuervorgaben werden über die Leitung 9c zur Anzeige 8 gebracht.

Die Anzeige 8 bringt Weisungen zur Darstellung, die den Gleitschirm-Springer die Richtung anzeigt, in die er zu steuern hat sowie Bremsvorgänge, die er einzuleiten hat. Diese Vorgaben können in Form von Befehlen zur Anzeige gebracht werden, nach denen der Pilot bestimmte Steuerleinen in bestimmter Weise zu betätigen hat. Alternativ oder zusätzlich kann die Anzeige 8 eine anschauliche Darstellung der Soll-Steuereingaben umfassen. Diese kann durch ein Zeigerinstrument mit einem Zeiger realisiert sein, dessen Abweichung von einer Mittelstellung dem Piloten in analoger Weise die Soll-Steuereingaben vermittelt. Diese anschauliche Darstellung kann auch durch farbige Leuchten realisiert sein, bei denen z.B. ein grünes Licht eine Soll-Rechtskurve und ein rotes Licht eine Soll-Linkskurve anzeigt und das Aufleuchten beider Leuchten ein Bremsmanöver vorgibt. Die Steuerbefehle für den Gleitschirm-Springer beziehen sich vorzugsweise auf die Horizontalebene des Gleitschirm-Systems. Optional kann jedoch auch eine Darstellung des Profils sowohl des Soll-Flugpfads wie auch des bisherigen Ist-Weges zur Darstellung kommen. Als weitere Option kann durch die Anzeige 8 die Position des Gleitschirm-Sy-stems über dem Gelände oder im dreidimensionalen Luftraum dargestellt werden. Dies kann mit einer zweidimensionalen oder dreidemensionalen Darstellung des Geländes bzw. des Luftraums erfolgen.

Gerätetechnisch kann die Anzeige 8 als Bildschirm, als Helmanzeige oder als Visier oder nach anderen Realisierungsformen nach dem Stand der Technik ausgeführt sein. Dabei kann die Ist-Position mit dem Soll-Flugpfad und/oder dem Gelände im relevanten Luftraum in zweidemensionaler oder dreidimensionaler Form zur Darstellung gebracht werden.

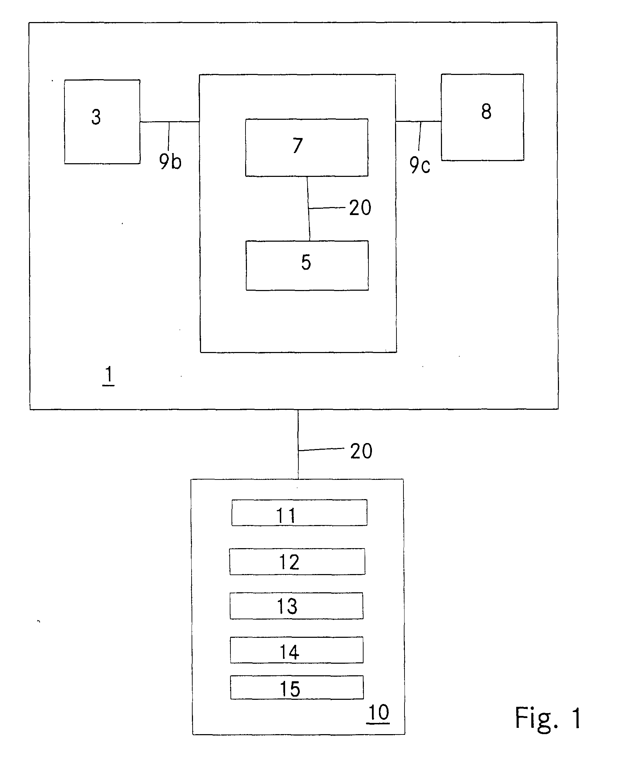

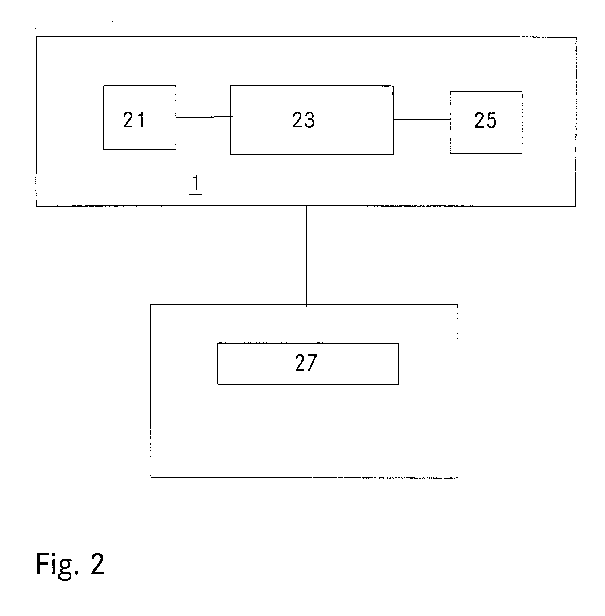

Bei der in der Fig. 2 dargestellten zweiten Ausführungsform des erfindungsgemäßen Flugführungs-Systems umfaßt die Ausrüstung des Springers eine Navigations-Einrichtung 21, die der Navigations-Einrichtung 3 der Fig. 1 entspricht, eine Empfangsstation 23 und eine Anzeige 25, die der Anzeige 8 in der Fig. 1 entspricht. Weiterhin ist die Missionsplanungsstation 10 erforderlich, die gegenüber der in Fig. 1 dargestellten Bodenstation zusätzlich eine Empfangs- und Sendeeinheit 27 umfaßt. Nach der Ausführungsform der Fig. 2 wird die Ist-Position des Gleitschirm-Systems im Einsatz per Funk an die Missionsplanungsstation 10 übermittelt. Die Missionsplanungsstation 10 übermittelt die relevanten Sollvorgaben zeitgerecht an die Empfangsstation 23 des Springers. Die Steuerbefehle werden in beschriebener Weise durch die Anzeige 25 zur Darstellung gebracht.

Die Analyse-Einheit kann als Missionsplanungsstation 10 oder als Bordstation in einem Flugzeug vorgesehen sein. Das Vorhandensein einer externen Missionsplanungsstation 10 kann den Vorteil haben, dass ein Einsatzleiter die Mission von einem oder mehreren Gleitschirm-Springern überwachen kann und bewerten kann. Dadurch ist eine permanente Bewertung des Einsatzes im Bedrohungsszenario während des Fluges der Gleitschirm-Systeme möglich.

## Patentansprüche

1. Steuereinheit für ein Gleitschirm-System für den bemannten Gleitschirm-Flug mit einer Navigations-Einrichtung (3) zur Ermittlung der momentanen Ist-Position des Gleitschirm-Systems,
**dadurch gekennzeichnet, dass**
die Steuereinheit ein Flugführungs-System (4) zur Ermittlung von Steuervorgaben aufgrund der Ist-Position sowie eines Flugprogramms umfaßt, das von einer Missionsplanungsstation (10) einlesbar ist,
dass das Flugführungs-System (4) weiterhin eine Anzeige (8) umfaßt, die die momentanen Steuervorgaben zur Anzeige bringt.

2. Steuereinheit nach dem Anspruch 1, **dadurch gekennzeichnet, dass** die Anzeige (8) zusätzlich den Soll-Flugpfad anzeigt.

3. Steuereinheit nach dem Anspruch 1 oder 2, **dadurch gekennzeichnet, dass** die Anzeige (8) zusätzlich das Gelände anzeigt.

4. Steuereinheit nach einem der voranstehenden Ansprüche, **dadurch gekennzeichnet, dass** die Darstellung dreidimensional ist.

5. Steuereinheit nach einem der voranstehenden Ansprüche, **dadurch gekennzeichnet, dass** die Anzeige (8) ein Zeigerinstrument mit einem Zeiger umfaßt, dessen Abweichung von einer Mittelstellung die Abweichung vom Soll-Flugpfad anzeigt.

6. Steuereinheit nach einem der voranstehenden Ansprüche, **dadurch gekennzeichnet, dass** die Anzeige (8) als Bildschirm realisiert ist.

7. Steuereinheit nach einem der voranstehenden Ansprüche, **dadurch gekennzeichnet, dass** die Anzeige (8) als Helmanzeige oder als Visier realisiert ist.

8. Missionsplanungsstation zur Erstellung eines Flugprogramms für ein Gleitschirm-System für den bemannten Gleitschirm-Flug, wobei die Missionsplanungsstation (10) ein Geländedaten-Modul (11) und eine Berechnungseinheit (12) umfaßt,
wobei die Berechnungseinheit (12) die dreidemensionalen atmosphärischen Bedingungen des relevanten Luftraums mit Windrichtung und Windgeschwindigkeit, Eigenschaften des Gleitschirm-Systems, ein Modul zur Errechnung zumindest eines Absetzpunktes des Gleitschirm-Systems für das Flugzeug auf der Basis eines vorgegebenen Landepunktes umfaßt.

9. Einsatzsystem mit einer Steuereinheit für ein Gleitschirm-System für den bemannten Gleitschirm-Flug mit einer Anzeige (8) für den Gleitschirm-Springer und einer Missionsplanungsstation (10), wobei die Missionsplanungsstation ein dreidimensionales Flugprogramm auf der Basis von Geländedaten, Eigenschaften des Gleitschirm-Systems und atmosphärischen Bedingungen ermittelt und an die Steuereinheit (1) übermittelt, wobei der Steuereinheit (1) eine Navigations-Einrichtung (3) zur Bestimmung der momentanen Ist-Position sowie eine Anzeige (8) umfaßt, die auf der Basis der Ist-Position und des Flugprogramms momentane Steuerbefehle zur Anzeige bringt.
